# EUROPÄISCHE PATENTSCHRIFT

(11) **EP 0 966 711 B1**
(45) Veröffentlichungstag und Bekanntmachung des Hinweises auf die Patenterteilung: **22.07.2009**
(21) Anmeldenummer: 98909336.4
(22) Anmeldetag: 05.02.1998
(51) Int. Cl.: G06F 12/14

(54) **MIKROCOMPUTER MIT EINER SPEICHERVERWALTUNGSEINHEIT**
MICROCOMPUTER WITH A MEMORY MANAGEMENT UNIT
MICRO-ORDINATEUR EQUIPE D'UNE GESTION MEMOIRE

(30) Priorität: 11.03.1997 DE 19709975
(43) Veröffentlichungstag der Anmeldung: 29.12.1999
(73) Patentinhaber: Infineon Technologies AG, 81669 München (DE); SIEMENS AKTIENGESELLSCHAFT, 80333 München (DE)
(72) Erfinder: SEDLAK, Holger, D-85658 Egmating (DE); BRÜCKLMAYR, Franz-Josef, D-87600 Kaufbeuren (DE)
(74) Vertreter: Epping - Hermann - Fischer
(86) Internationale Anmeldenummer: PCT/DE1998/000319
(87) Internationale Veröffentlichungsnummer: WO 1998/040821

(56) Entgegenhaltungen:
- DE-A- 3 709 205
- US-A- 4 087 856
- US-A- 5 325 496
- US-A- 5 452 431

## Beschreibung

In einem Mikrocomputer hat das jeweils aktuell laufende Programm die Kontrolle über den Computer beziehungsweise die in ihm enthaltenen und an ihn angeschlossenen Speicher und sonstigen peripheren Geräte. Das bedeutet unter anderem, daß immer die Adresse eines Speichers abgesprungen wird, die in einem Programmbefehl enthalten ist, unabhängig davon, ob der diese Adresse enthaltende Speicherbereich dem Programm zur Verfügung stehen soll oder nicht.

Da dies in vielen Fällen nicht der Fall ist - es könnten auf diese Weise Speicherbereiche mit eigentlich geheimem Speicherinhalt ausgeforscht werden -, werden Sicherheitsvorkehrungen getroffen.

Eine Möglichkeit solcher Sicherheitsvorkehrungen ist die Verwendung einer Speicherverwaltungseinheit (Memory Management Unit), im folgenden MMU genannt, wie sie beispielsweise im iAPX286 der Firma INTEL vorhanden ist. Diese wird vornehmlich verwendet, wenn nicht nur (Chip-)Herstellerprogramme ablaufen sollen, sondern auch Anwenderprogramme, die dann mißbräuchlich eingesetzt werden könnten. Die MMU ist zwischen der zentralen Verarbeitungseinheit, im folgenden CPU genannt, des Computers und dem diese mit den weiteren Einheiten wie Speicher verbindenden Bus angeordnet.

Jede Anwendung erhält einen Eintrag in der MMU, wobei festgehalten wird, in welchem Speicher die Anwendung steht, an welche Adresse sie beginnt, wie lange sie ist und welche Zugriffsrechte bestehen. Diese Daten muß der Anwender beim Einschreiben seiner Anwendung beziehungsweise seines Programms in den Speicher des Mikrocomputers angeben. Das Anwendungsprogramm hat dann nur Zugriffsrechte auf Speicherbereiche, die innerhalb des durch die zuvor angegebene Anfangsadresse und Länge definierten Bereichs liegen. Der Eintrag in die MMU beschreibt also eine Eigenschaft eines in einem Datenspeichersegment gespeicherten Programms. Der Bereich, in dem dieser Eintrag in der MMU steht wird daher als Segment-Deskriptor bezeichnet.

Jeder Aufruf einer Adresse durch das Programm wird durch die MMU geprüft und nur wenn die Adresse im erlaubten Bereich liegt, wird dem Aufruf stattgegeben, ansonsten erfolgt ein Abbruch des Programmlaufs oder eine Fehlermeldung.

Dies gibt im Falle, daß Programme verschiedener Anwender im Speicher stehen, für die jeweiligen Anwender die Sicherheit, daß andere Anwender ihre Programme nicht ausspähen oder gar verändern können, da jedes Anwenderprogramm nur innerhalb des vom Anwender beim Einschreiben des Programms angegebenen Bereichs operieren kann.

Die US 5,452,431 beschreibt einen Mikroschaltkreis mit CPU, die über einen Adressbus an einen Programmspeicher angeschlossen ist, der mehrere Bereiche für Anwenderprogramme aufweist. Dem Speicherbereich für Anwendurgsprogramme ist ein Zonenspeicherbereich zugeordnet, in dem tabellarisch die Anfangs- und Endadresse und ein Referenzcode der Anwendungsprogramme abgelegt ist. Beim Ablauf eines Anwenderprogrammes werden die Anfangs- und Endadresse des Speicherbereiches dieses Programmes mit aktuell aufgerufenem Adressen verglichen wobei eine aufgerufene Adresse, die außerhalb des durch die Anfangs- und Endadresse definierten Bereiches liegt zu einem Programmabbruch führt. Dieser Schutzmechanismus geht jedoch nicht über die durch eine MMU geschaffenen Schutzmöglichkeiten hinaus.

Die DE 37 09 205 A1 in Verbindung mit der dort zitierten DE 35 33 787 A1 beschreibt eine Schutzschaltung zum Schutz von in einem Speicherbereich stehenden Daten. Dem Speicherbereich ist ein Deskriptor zugeordnet, in dem Eigenschaften dieses Bereiches eingetragen sind. Er enthält außerdem eine Präambel, in der eingetragen ist, ob es sich um geschützte Daten handelt. Außerdem enthält die Präambel einen Vektor, der bei jeder Adressierung dieses Speicherbereiches in einen Zwischenspeicher abgelegt wird. Nach einer positiven Überprüfung der Zugriffsberechtigung auf die geschützten Daten wird der Vektor zum den Speicher verwaltenden Rechenwerk übertragen, das dann ein Programm zur Verarbeitung der geschützten Daten aufruft, dessen Speicherort durch den Vektor angezeigt wird. Auf diese Weise wird sichergestellt, daß die geschützten Daten nicht in beliebiger Weise sondern nur durch dieses bestimmte Programm verarbeitet werden können.

Die Anwenderprogramme weisen üblicherweise Unterprogramme auf. Es kommt dabei häufig vor, daß verschiedene Anwender die gleichen Unterprogramme benötigen und dadurch aufgrund der oben erläuterten Sicherheitsvorkehrungen diese Unterprogramme mehrmals vorhanden sind. Dies erfordert unnötig viel Speicherplatz.

Es ist also erwünscht und wäre auch sinnvoll, Unterprogramm-Bibliotheken in einem Speicherbereich des Mikrocomputers vorzusehen, auf die verschiedene Anwenderprogramme, eventuell unter Einbeziehung besonderer Sicherheitsmaßnahmen wie beispielsweise die Überprüfung einer persönlichen Identifikationsnummer, zugreifen können.

Hierdurch würden sich aber wieder die oben geschilderten Probleme ergeben, daß nämlich ein Anwender in betrügerischer Absicht unter Umgehung der Überprüfungsroutinen beliebig in ein Bibliotheksprogramm einspringen könnte.

Die Aufgabe vorliegender Erfindung ist es also, einen Mikroprozessor anzugeben, der einen Zugriff durch Anwenderprogramme auf Bibliotheksprogramme erlaubt, dabei aber manipulationsgeschützt ist.

Die Aufgabe wird durch einen Mikrocomputer gemäß Anspruch 1 gelöst. Vorteilhafte Weiterbildungen sind in den Unteransprüchen angegeben.

Bei dem erfindungsgemäßen Mikrocomputer ist kein direkter Sprung zu einem Bibliotheksprogramm möglich. Stattdessen wird im Call-Befehl außer der Bezeichnung des das Bibliotheksprogramm beschreibenden MMU-Segment-Deskriptors eine Vektornummer angegeben. Die Bezeichnung des MMU-Segment-Deskriptors kann beispielsweise eine Nummer oder ein Name sein.

Durch die MMU wird überprüft, ob die angegebene Vektornummer überhaupt vorkommt und ob sie zum aufgerufenen Bibliotheksprogramm gehört. Bei positivem Testergebnis wird ein Zugriff auf einen Vektor-Speicherbereich erlaubt, dessen Anfangsadresse und Länge im MMU-Segment-Deskriptor gespeichert ist. Erst in diesem Vektor-Speicherbereich, in dem zum einen die Vektornummer steht, steht auch eine Sprungadresse oder die Adresse eines Sprungbefehls- also ein Vektor - zur Bibliotheksprogramm-Anfangsadresse. Auf diese Weise wird wirkungsvoll verhindert, daß ein Anwender direkt in das Bibliotheksprogramm einspringen kann und dabei möglicherweise Sicherheitsroutinen umgeht.

Die Erfindung wird nachfolgend anhand eines Ausführungsbeispiels mit Hilfe von Figuren näher erläutert. Dabei zeigen:
- Figur 1: in schematischer Darstellung ein Blockdiagramm ei- nes Mikrocomputers,
- Figur 2: in schematischer Darstellung die Zuordnung von An- wenderprogrammen zu Inhalten der MMU-Segment- Deskriptoren und
- Figur 3: in schematischer Darstellung die Art und Weise ei- nes Aufrufs eines Bibliotheksprogramms.

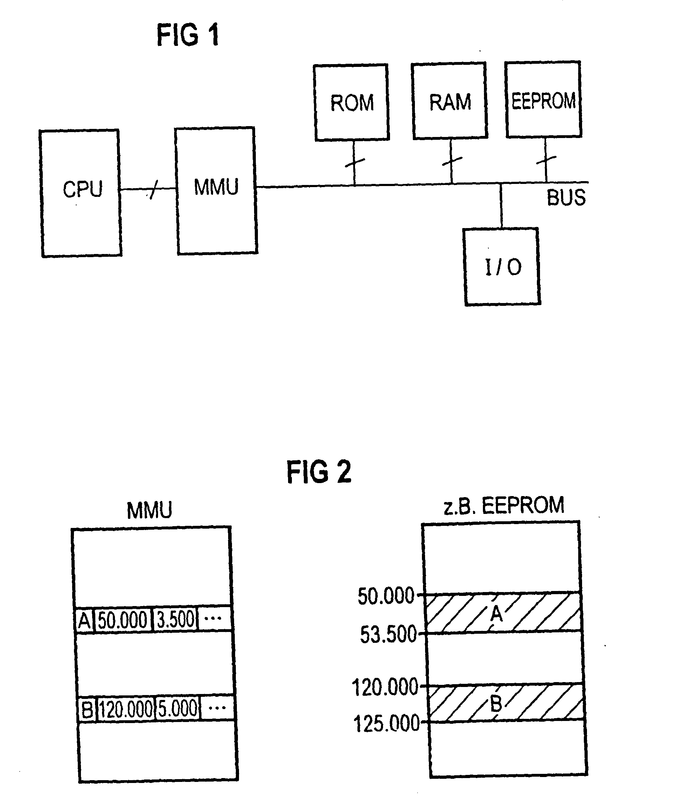

Die Figur 1 zeigt in stark schematisierter Weise die Bestandteile eines Mikrocomputers. Eine zentrale Verarbeitungseinheit CPU ist über einen Adreßbus mit einer Speicherverwaltungseinheit MMU verbunden. Die MMU ist ihrerseits mit dem Mikrocomputer-internen Adreßbus verbunden, an dem die Speicher ROM, RAM und EEPROM sowie eine Ein/Ausgabe-Einheit I/O angeschlossen sind. Es können auch beliebige andere, in Mikrocomputern übliche Einheiten vorhanden sein, die jedoch nicht dargestellt sind, da sie keinen Bezug zur Erfindung haben. Ebenso wurde auf die Darstellung des Kontroll- und Datenbusses verzichtet. Jedenfalls soll der erfindungsgemäße Mikrocomputer alle für seine Funktion nötigen, aus dem Stand der Technik bekannten Bestandteile aufweisen.

Die CPU legt logische Adressen an die MMU an, während die MMU daraus die physikalischen Adressen ermittelt und an die Speicher anlegt. Die MMU ist hierzu, wie in Figur 2, linkem Teil dargestellt ist, mit Speicherplätzen für Segment-Deskriptoren ausgestattet, in denen die einem Anwendungsprogramm A, B zugeordnete Anfangsadresse, Länge und die Zugriffsrechte eingetragen sind. Die MMU wird außerdem einen nicht-dargestellten Addierer aufweisen, um aus der logischen Adresse die physikalische Adresse durch Addition der Anfangsadresse eines Anwenderprogramms ermitteln zu können. Es sind exemplarisch die Segmente für zwei Anwenderprogramme A und B dargestellt, wobei das Programm A bei einer Adresse 50.000 beginnt und eine Länge von 3.500 Adressen aufweist, während das Programm B bei einer Adresse 120.000 beginnt und eine Länge von 5.000 Adressen hat.

Bei einem Ablauf des Programms A in der CPU werden entsprechend der Länge des Programms Adressen zwischen 0 und 3.499 aufgerufen. Diese logischen Adressen werden der MMU zugeführt, die den Anfangswert 50.000 dazu addiert und die somit erhaltene physikalische Adresse an den internen Adreßbus anlegt. Vorher überprüft die MMU, ob die logische Adresse im Adreßbereich liegt, der der im MMU-Segment-Deskriptor gespeicherten Länge entspricht. Der MMU-Segment-Deskriptor kann beispielsweise als Speicherregister ausgebildet sein. In der MMU sind für diese Überprüfung (nicht dargestellte) Vergleicher vorhanden, an die einerseits die aktuelle Adresse und andererseits die Randadressen des aktuellen Programms angelegt werden. Wird durch das Programm eine höhere oder eine niederere Adresse aufgerufen, erfolgt ein Abbruch oder eine Fehlermeldung oder etwas dergleichen.

In einem weiteren Bereich eines MMU-Segment-Deskriptors sind Zugriffsrechte eingetragen, so daß festgelegt werden kann, ob auf bestimmte Adreßbereiche nur lesend oder lesend und schreibend zugegriffen werden kann.

Für die bisherigen Erläuterungen ist es unerheblich, ob die Anwenderprogramme im RAM, im EEPROM oder in einem andersgearteten Speicher stehen und auf welche Speicherplätze durch ein Anwenderprogramm zugegriffen werden soll.

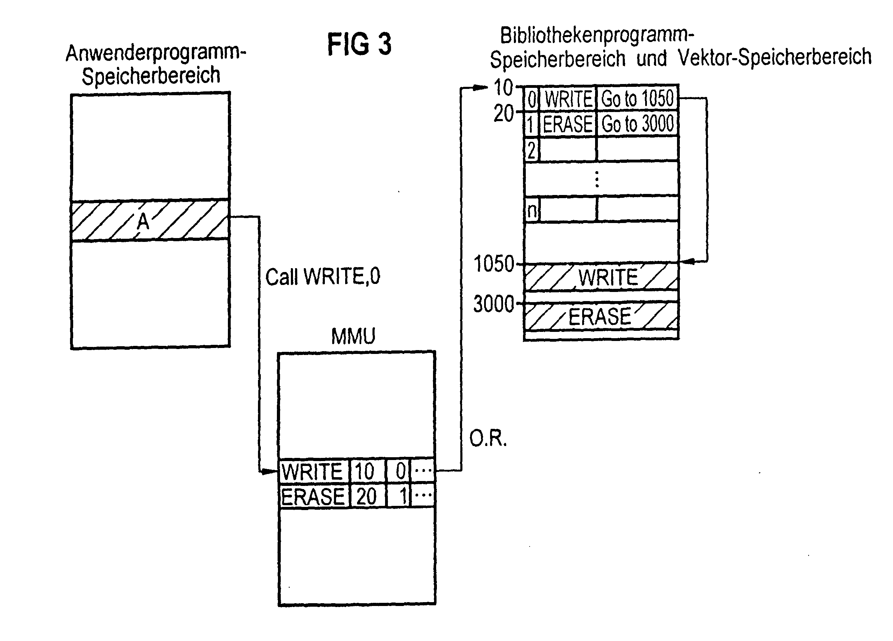

Figur 3 zeigt nun die erfindungsgemäße Erweiterung eines bekannten Mikrocomputers. Hier ist außerdem ein Speicherbereich für allen Anwendern zugängliche Unterprogramme, also ein Bibliotheksprogramm-Speicherbereich vorgesehen. Hierfür kann ein beliebiger Speicher verwendet werden.

Als Beispiele sind in Figur 3 im Bibliotheksprogrammspeicher an den Adressen 1.050 und 3.000 ein Write- und ein Erase-Programm dargestellt.

In erfindungsgemäßer Weise kann nun ein Anwenderprogramm diese Adressen nicht direkt anspringen, da sonst auch ein undefinierter Einsprung - unter Umgehung von Sicherheitsvorkehrungen - in diese Programme möglich wäre. Stattdessen ist ein Vektor-Speicherbereich vorgesehen, in dem Vektornummern und die diesen zugeordneten Anfangsadressen der Bibliotheksprogramme als Sprungziele (Vektoren) 1050, 3000 eingetragen sind. Alternativ könnte auch die Adresse eines zum Unterprogramm führenden Sprungbefehls gespeichert sein. Außerdem kann der Name des Unterprogramms als Kennzeichnung eingetragen sein, wie dies in Figur 3 dargestellt ist. Dies ist jedoch nicht notwendig.

Ein Anwender erfährt die tatsächliche, physikalische Adresse eines Bibliotheksprogramms nicht. Außer dem Sicherheitsaspekt hat das auch den Vorteil, daß diese Programme vom Betriebssystem bei Bedarf beliebig verschoben werden können, ohne daß die Anwenderprogramme geändert werden müssen. Es muß dann nur das Sprungziel im Vektor-Speicherbereich geändert werden.

Jeder Bibliotheksprogramm-Speicherbereich kann ebenso wie jedes andere Programm in der MMU eingetragen werden. In erfindungsgemäßer Weise ist jedem Bibliotheksprogramm-Speicherbereich ein Vektor-Speicherbereich zugeordnet, in dem die Vektoren auf die im Bibliotheksprogramm-Speicherbereich befindlichen Bibliotheksprogramme eingetragen sind. Die Eintragung erfolgt durch Angabe der Anfangsadresse und Länge des Vektor-Speicherbereichs.

Alternativ kann auch der Vektor-Speicherbereich in einem Segment-Deskriptor der MMU eingetragen sein, wobei in diesem Fall die Anfangsadresse und Länge des Bibliotheksprogramm-Speicherbereichs im Segment-Deskriptor eingetragen sind. Außerdem ist es möglich, den Vektor-Speicherbereich und den Bibliotheksprogramm-Speicherbereich zusammenzufassen und im Segment-Deskriptor eine Anfangsadresse und zwei Längen anzugeben.

Ein Aufruf des Bibliotheksprogramms durch ein Anwenderprogramm erfolgt durch die Angabe der MMU-Segment-Deskriptoren-Bezeichnung wie beispielsweise des Bibliotheksprogramm-Namens oder einer Zahl und der Vektornummer. Die MMU prüft dann, ob die Vektornummer im Vektor-Speicherbereich überhaupt existiert und ob die aufgerufene Programmbezeichnung mit der der Vektornummer zugeordneten Eintragung übereinstimmt. Nur bei positivem Prüfungsergebnis erfolgt eine Adressierung der entsprechenden Adresse im Vektor-Speicherbereich und erst von dort erfolgt ein Sprung zum Bibliotheksprogramm selbst.

## Patentansprüche

1. Mikrocomputer mit einer zentralen Verarbeitungseinheit (CPU), die über eine Speicherverwaltungseinheit (MMU) mit einem Adressbus (BUS) verbunden ist, an den zumindest ein Programmspeicher (ROM, EEPROM) angeschlossen ist, mit
- einem Speicherbereich für Anwenderprogramme (A, B),
- einem weiteren Speicherbereich für Bibliotheksprogramme (WRITE, ERASE) und
- einem Vektor-Speicherbereich, in dem für die Bibliotheksprogramme wenigstens eine Vektornummer (0... n) und eine dieser zugeordnete Sprungadresse (1050, 3000) oder eine Adresse zu einem Sprungbefehl zur Bibliotheksprogramm-Anfangadresse gespeichert ist,
- wobei in der Speicherverwaltungseinheit (MMU)
■ jedem Anwenderprogramm (A bzw. B) ein Segment-Deskriptor zugeordnet ist, in dem zumindest die Anfangsadresse (ANFA bzw. ANFB), die Länge (LA bzw. LB) und die Zugriffsrechte (ZRA bzw. ZRB) des Anwenderprogramms (A bzw. B) gespeichert sind und
■ für jedes Bibliotheksprogramm ein MMU-Segment-Deskriptor mit der Zuordnung von Vektornummer, Anfangsadresse im Vektor-Speicherbereich und einer MMU-Segment-Deskriptor-Bezeichnung gespeichert ist,
- wobei
■ ein Aufruf eines Bibliotheksprogramms (WRITE, ERASE) durch ein Anwenderprogramm (A, B) zumindest die MMU-Segment-Deskriptor-Bezeichnung sowie die Vektornummer (0... n) enthalten muss,
■ die Speicherverwaltungseinheit (MMU) prüft, ob die MMU-Segment-Deskriptor-Bezeichnung mit der der Vektornummer zugeordneten Eintragung übereinstimmt, und
■ nur bei positivem Prüfungsergebnis der Vektornummer die in dem Vektor-Speicherbereich zugeordnete Sprungadresse (1050, 3000) oder Adresse zu einem Sprungbefehl zur Bibliotheksprogramm-Anfangadresse durch die Speicherverwaltungseinheit (MMU) zugeordnet wird, über die ein Sprung zum aufgerufenen Bibliotheksprogramm (WRITE, ERASE) erfolgt.

2. Mikrocomputer nach Anspruch 1, **dadurch gekennzeichnet, dass** die Zuordnung von Vektor-Speicherbereich und Bibliotheksprogramm-Speicherbereich durch die Angabe von Anfangsadresse und Länge des Vektor-Speicherbereichs in einem dem Bibliotheksprogramm-Speicherbereich zugeordneten MMU-Segment-Deskriptor erfolgt.

3. Mikrocomputer nach Anspruch 1**, dadurch gekennzeichnet, dass** die Zuordnung von Vektor-Speicherbereich und Bibliotheksprogramm-Speicherbereich durch die Angabe von Anfangsadresse und Länge des Bibliotheksprogramm-Speicherbereichs in einem dem Vektor-Speicherbereich zugeordneten MMU-Segment-Deskriptor erfolgt.

4. Mikrocomputer nach Anspruch 1, **dadurch gekennzeichnet, dass** die Zuordnung von Vektor-Speicherbereich und Bibliotheksprogramm-Speicherbereich durch Kopplung der beiden Bereiche zu einem gemeinsamen Speicherbereich erfolgt, welcher durch Angabe von Anfangsadresse und zwei Längenangaben im zugeordneten MMU-Segment-Deskriptor beschrieben ist.

5. Mikrocomputer nach einem der Ansprüche 1 bis 4, **dadurch gekennzeichnet, dass** eine Sprungadresse oder eine Adresse eines zu einem Bibliotheksprogramm führenden Sprungbefehls einen Vektor bildet.

6. Mikrocomputer nach Anspruch 5, **dadurch gekennzeichnet, dass** sich die Vektornummer (0... n) aus der relativen Position des Vektors (1050,3000) im Vektor-Speicherbereich ermittelt.

7. Mikrocomputer nach Anspruch 5, **dadurch gekennzeichnet, dass** eine Vektornummer (0... n) aus mehreren Bytes besteht und ein aktueller Vektor durch Vergleich zwischen den im Vektor-Speicherbereich enthaltenen Vektornummern (0... n) und der im Aufruf enthaltenen Vektornummer ermittelt wird.

## Claims

1. Microcomputer with a central processing unit (CPU), which is connected via a memory management unit (MMU)to an address bus (BUS), to which at least one program memory (ROM, EEPROM) is connected, with
- a memory area for user programs (A, B)
- a further memory area for library programs (WRITE, ERASE) and
- a vector memory area, in which is stored at least one vector number (0...n) and a jump address (1050, 3000) assigned to said number for the library programs, or an address to a jump command to the library program start address,
- wherein in the memory management unit (MMU)
■ every user program (A and/or B) is assigned a segment descriptor, in which at least the start address (ANFA and/or ANFB), the length (LA and/or LB) and the access rights (ZRA and/or ZRB) of the user program (A and/or B) are stored, and
■ for each library program a MMU-segment descriptor is stored, with the assignment of vector number, start address in the vector memory area and an MMU-segment descriptor label,
- wherein
■ a call to a library program (WRITE, ERASE) by a user program (A, B) must contain at least the MMU-segment descriptor label and the vector number (0... n),
■ the memory management unit (MMU) tests whether the MMU-segment descriptor label agrees with the entry assigned to the vector number, and
■ only in the case of a positive test result of the vector number, the jump address (1050, 3000), assigned in the vector memory area, or address to a jump command to the library program start address is assigned by the memory management unit (MMU), by means of which address a jump is made to the called library program (WRITE, ERASE).

2. Microcomputer according to Claim 1, **characterised in that** the assignment of vector memory area and library program memory area is effected by specifying the start address and length of the vector memory area in a MMU-segment descriptor assigned to the library program memory area.

3. Microcomputer according to Claim 1, **characterised in that** the assignment of vector memory area and library program memory area is effected by specifying the start address and length of the library program memory area in a MMU-segment descriptor assigned to the vector memory area.

4. Microcomputer according to Claim 1, **characterised in that** the assignment of vector memory area and library program memory area is effected by linking the two areas to a common memory area, which is described by specifying the start address and two length statements in the assigned MMU-segment descriptor.

5. Microcomputer according to any one of Claims 1 to 4, **characterised in that** a jump address, or an address of a jump command leading to a library program, forms a vector.

6. Microcomputer according to Claim 5, **characterised in that**
the vector number (0... n) is determined from the relative position of the vector (1050,3000) in the vector memory area.

7. Microcomputer according to Claim 5, **characterised in that** a vector number (0... n) consists of multiple bytes and a current vector is determined by comparison between the vector numbers (0... n) contained in the vector memory area and the vector number contained in the program call.

## Revendications

1. Micro-ordinateur comportant une unité centrale de traitement (CPU) connectée via une unité de gestion de mémoire (MMU) à un bus d'adresses (BUS) auquel au moins une mémoire morte programmable (ROM, EEPROM) est connectée, comportant
- un espace mémoire pour des programmes d'application (A, B),
- un autre espace mémoire pour des programmes de bibliothèque (WRITE, ERASE) et
- un espace mémoire vectoriel dans lequel au moins un numéro vectoriel (0... n) et une adresse de saut qui lui est assignée (1050, 3000) ou une adresse pour une commande de saut vers l'adresse initiale du programme de bibliothèque sont enregistrés pour le programme de bibliothèque,
- dans lequel, dans l'unité de gestion de mémoire (MMU),
■ à chaque programme d'application (A, B) est assigné un descripteur de segment, dans lequel au moins l'adresse initiale (ANPA, ANFB), la longueur (LA, LB) et les droits d'accès (ZRA, ZRB) du programme d'application (A, B) sont enregistrés, et
■ pour chaque programme de bibliothèque, un descripteur de segment MMU est enregistré, qui comporte l'assignation du numéro vectoriel, de l'adresse initiale dans l'espace mémoire vectoriel et d'un identifiant de descripteur de segment MMU,
- moyennant quoi
■ un appel de programme de bibliothèque (WRITE, ERASE) par un programme d'application (A, B) doit comprendre au moins l'identifiant du descripteur de segment MMU ainsi que le numéro vectoriel (0.... n),
■ l'unité de gestion de mémoire (MMU) vérifie si l'identifiant de descripteur de segment MMU correspond à l'enregistrement assigné au numéro vectoriel, et,
■ uniquement lorsque le résultat de la vérification du numéro vectoriel est positif, l'adresse de saut (1050, 3000) assignée dans l'espace mémoire vectoriel ou l'adresse d'une commande de saut vers l'adresse initiale du programme de bibliothèque est assignée par l'unité de gestion de mémoire (MMU), via laquelle un saut s'effectue vers le programme de bibliothèque (WRITE, ERASE) appelé.

2. Micro-ordinateur selon la revendication 1, **caractérisé en ce que** l'assignation d'espace mémoire vectoriel et d'espace mémoire de programme de bibliothèque s'effectue par la déclaration de l'adresse initiale et de la longueur de l'espace mémoire vectoriel dans un descripteur de segment MMU assigné à l'espace mémoire du programme de bibliothèque.

3. Micro-ordinateur selon la revendication 1, **caractérisé en ce que** l'assignation d'espace mémoire vectoriel et d'espace mémoire de programme de bibliothèque s'effectue par la déclaration de l'adresse initiale et de la longueur de l'espace mémoire du programme de bibliothèque dans un descripteur de segment MMU assigné à l'espace mémoire vectoriel.

4. Micro-ordinateur selon la revendication 1, **caractérisé en ce que** l'assignation d'espace mémoire vectoriel et d'espace mémoire de programme de bibliothèque s'effectue par la jonction des deux espaces pour constituer un espace mémoire commun, lequel est décrit par la déclaration de l'adresse initiale et de deux déclarations de longueur dans le descripteur de segment MMU assigné.

5. Micro-ordinateur selon l'une des revendications 1 à 4, **caractérisé en ce qu'**une adresse de saut ou une adresse de commande de saut menant à un programme de bibliothèque constitue un vecteur.

6. Micro-ordinateur selon la revendication 5, **caractérisé en ce que** le numéro vectoriel (0... n) est déterminé à partir de la position relative du vecteur (1050,3000) dans l'espace mémoire vectoriel.

7. Micro-ordinateur selon la revendication 5, **caractérisé en ce qu'**un numéro vectoriel (0... n) est composé de plusieurs octets et **en ce qu'**un vecteur actuel est déterminé par comparaison entre les numéros vectoriels (0... n) contenus dans l'espace mémoire vectoriel et le numéro vectoriel contenu dans l'appel.
